# FASCICULE DE BREVET EUROPEEN

(11) **EP 0 770 335 B1**
(45) Date de publication et mention de la délivrance du brevet: **04.03.1998**
(21) Numéro de dépôt: 95810609.8
(22) Date de dépôt: 28.09.1995
(51) Int. Cl.: A23L 1/164, A23P 1/12, A21C 11/16

(54) **Amuse-bouche**
Imbiss-Snack
Snack food

(43) Date de publication de la demande: 02.05.1997
(73) Titulaire: SOCIETE DES PRODUITS NESTLE S.A., 1800 Vevey (CH)
(72) Inventeur: Dupart, Pierre, CH-8405 Winterthur (CH); Desjardins, Jean-Jacques, CH-1026 Denges (CH); Heck, Ernst, CH-1302 Vufflens La Ville (CH); Geromini, Osvaldo, CH-1358 Valeyres Rances (CH)
(74) Mandataire: Wavre, Claude-Alain

(56) Documents cités:
- US-A- 4 011 038
- US-A- 4 246 293
- US-A- 5 262 190

## Description

La présente invention a pour objet un procédé de fabrication d'un amuse-bouche par cuisson-extrusion d'un mélange à base de farine ou semoule de féculent.

On connaît divers procédés de préparation d'amuses-bouches par cuisson-extrusion.

C'est ainsi que, par exemple, US-A-4246293 (J.M. Larson) décrit un procédé de préparation d'un amuse-bouche à base de pomme de terre enrichi en protéines, dans lequel on blanchit des pommes de terre découpées en morceaux, on les présèche, on y mélange un additif riche en protéines, on réduit le mélange en purée, on cuit-extrude le mélange, on obtient un boudin collant que l'on découpe en cylindres de 1,27 cm de diamètre, et l'on passe ces cylindres à la grande friture. Un produit ainsi obtenu présente une teneur en matière grasse relativement élevée.

US-A-5262190 (Cunningham et al.) décrit un procédé de préparation d'un amuse-bouche à base de viande, dans lequel on prépare un mélange comprenant au moins 5% de viande, au moins 50% de farine et moins de 4% de graisse, on cuit-extrude le mélange et l'on obtient un boudin expansé que l'on peut sécher et aromatiser, notamment avec un arôme de taco ou de fromage, par exemple. Un produit ainsi obtenu présente une teneur en matière grasse relativement basse, mais sa texture diffère notablement de celle d'un tortilla, d'un chips ou d'un cracker traditionnels obtenus en passant à la grande friture un morceau d'abaisse d'une pâte à base de farine de maïs, de pomme de terre ou de blé, par exemple.

US-A-4011038 (Willemsen) décrit une plaque présentant des orifices oblongs présentant des petites échancrures à leurs extrémités destinée à être utilisée comme filière d'extrusion à la sortie d'une presse à piston pour fabriquer des chips de pâte crue à frire ensuite. La pâte à chips crue à base de farine de pomme de terre, d'un liquide et de blanc d'oeuf pressée au travers de la plaque sous la poussée du piston est ainsi extrudée en forme de bandes présentant des nervures en relief près de leurs bords. Ces bandes sont découpées à la sortie de la plaque et les morceaux découpés s'empilent les uns sur les autres sans coller les uns aux autres grâce aux nervures en relief. Ceci permet de les plonger ensuite en vrac dans la grande friture sans craindre qu'ils restent collés les uns aux autres.

La présente invention a pour but de proposer un procédé de fabrication simple, pratique et susceptible de permettre une réduction de consommation d'énergie, en l'occurrence un procédé de fabrication par cuisson-extrusion, d'un amuse-bouche qui présente une texture semblable à celle d'un tortilla, d'un chips ou d'un cracker traditionnels, par exemple, tout en présentant une teneur en matière grasse relativement basse.

A cet effet, dans le procédé de fabrication d'un amuse-bouche selon la présente invention, on prépare un mélange comprenant au moins une farine ou semoule de féculent et, le cas échéant, une quantité d'eau ajoutée telle qu'il présente une teneur en eau de 8-18%, on cuit-extrude le mélange, l'extrusion étant réalisée au travers d'une filière présentant au moins un orifice oblong débouchant dans l'atmosphère ambiante, de manière à obtenir un boudin expansé présentant une forme de bande présentant un coefficient d'expansion de 2 à 6, on lamine la bande de manière à réduire son épaisseur d'un facteur 2 à 6 et on la découpe en morceaux.

On a constaté avec surprise qu'un tel procédé de cuisson-extrusion permet effectivement de fabriquer un amuse-bouche à teneur en matière grasse relativement basse dont la texture ressemble à s'y méprendre à celle d'un amuse-bouche obtenu par un procédé traditionnel dans lequel on passe à la grande friture un morceau d'abaisse d'une pâte à base de farine de féculent.

De même, ce procédé est effectivement susceptible de permettre une réduction notable de l'énergie consommée en vaporisation d'eau, par rapport à celle consommée dans un procédé traditionnel impliquant le passage à la grande friture d'une pâte présentant une teneur en eau qui peut être relativement élevée.

Pour mettre en oeuvre le présent procédé, on prépare donc un mélange comprenant au moins une farine ou semoule de féculent et présentant une teneur en eau de 8-18%, un peu d'eau étant ajoutée au mélange, le cas échéant, pour obtenir une telle teneur.

On peut choisir le féculent parmi les céréales telles que le blé, le seigle ou le maïs, et parmi les tubercules ou racines telles que la pomme de terre, le manioc ou l'igname, par exemple.

De préférence, on prépare un mélange comprenant, en parties en poids, 10-98 parties de farine ou semoule de maïs, 0-88 parties de farine de pomme de terre, 1-3 parties de chlorure de sodium et 0-3 parties de saccharose.

De préférence, on prépare un mélange présentant une teneur en matière grasse de 8-15%, en % sur matière sèche, cette matière grasse étant apportée au moins en partie par ladite farine ou semoule de féculent, une autre partie pouvant être ajoutée au mélange sous forme d'huile ou graisse comestible telle que l'huile de palme hydrogénée, par exemple.

On peut également incorporer au mélange un agent aromatisant et/ou un agent renforçateur d'arôme tels que des épices, de l'acide citrique et/ou du glutamate de sodium, par exemple.

De préférence, on cuit-extrude le mélange dans des conditions telles que le boudin cuit-extrudé soit effectivement cuit, autrement dit que la matière féculente qu'il comprend soit suffisamment gélatinisée et qu'il ne soit pas nécessaire de prévoir une étape de cuisson ultérieure de l'amuse-bouche pour qu'il soit prêt à la consommation.

Pour ce faire, on peut cuire-extruder le mélange sous une pression de 10-15 MPa à une température de 80-200°C, de préférence 150-180°C durant 20-60 s, dans une extrudeuse bivis, par exemple. On peut ajuster la vitesse de rotation des vis de l'extrudeuse à 100-400 tours par min (rpm), de préférence 150-180 rpm, par exemple.

De préférence, on réalise l'extrusion au travers d'une filière présentant au moins un orifice de sortie en forme de fente de 0,7-3 mm de largeur et de 2-10 cm de longueur. Une telle filière peut être réalisée sous forme d'une plaque d'acier percée d'un canal dont l'orifice de sortie, autrement dit l'ouverture apparente au niveau de la surface extérieure de la plaque, qui débouche dans l'espace ambiant, présente la forme d'une telle fente.

On extrude la bande dans des conditions telles qu'elle présente un coefficient d'expansion de 2 à 6, c'est-à-dire que, du fait de l'expansion du boudin extrudé en forme de bande, son épaisseur augmente de 2 à 6 fois par rapport à la largeur correspondante de l'orifice de sortie de la filière. On choisit donc l'augmentation de l'épaisseur du boudin cuit-extrudé en forme de bande comme critère préférentiel de son expansion, sa largeur augmentant dans une mesure moindre et surtout moins significative.

On peut laminer la bande sous l'effet d'au moins un rouleau exerçant sur elle une pression telle que son épaisseur soit notablement réduite, de manière que la texture du produit final soit comparable à la texture d'un tortilla, d'un chips ou d'un cracker préparé de manière traditionnelle. On peut obtenir cet effet en laminant la bande expansée sous un rouleau ou entre deux rouleaux exerçant sur elle une pression de 10-50 kPa de manière à réduire son épaisseur d'un facteur 2 à 6, la largeur de la bande n'augmentant pratiquement pas au cours de ce laminage, par exemple. La température des rouleaux au cours du laminage peut être contrôlée et maintenue à 10-40°C, par exemple.

Enfin, on peut découper la bande laminée par estampage en morceaux présentant diverses formes telles que triangulaire, circulaire ou ovale, par exemple.

L'amuse-bouche ainsi obtenu peut présenter une teneur en eau de environ 5-13%, par exemple. Il peut être consommé tel quel si sa teneur en eau est située dans le bas de ce domaine.

On le soumet de préférence à un post-séchage, notamment s'il présente une teneur en eau supérieure ou égale à environ 8%. On peut réaliser un tel post-séchage à l'air chaud à 140-160°C en lit fluidisé ou au four durant quelques min, jusqu'à une teneur en eau résiduelle de 3-5%, par exemple.

On peut prévoir de renforcer le goût et/ou l'arôme de cet amuse-bouche en le saupoudrant d'un agent aromatisant en poudre ou en pulvérisant sur lui un agent aromatisant liquide, par exemple. On peut en particulier pulvériser sur lui 2-3% d'une huile ou d'une émulsion aromatique capable de conférer une sensation en bouche qui rappelle celle conférée par un produit passé à la grande friture, tout en prévoyant que sa teneur en matière grasse totale ne dépasse pas 15%, par exemple.

On peut enfin prévoir un toastage optionnel final, notamment par exposition à un rayonnement infrarouge, par exemple.

Les exemples ci-après présentent à titre d'illustration quelques modes de réalisation du procédé de préparation d'un amuse-bouche selon la présente invention. Les pourcentages et parties y sont donnés en poids.

### Exemple 1

Pour préparer le mélange à extruder, on déverse les différents ingrédients de la composition pulvérulente suivante dans la trémie d'alimentation d'une extrudeuse CLEXTRAL de type BC 45, à raison de 45 kg de composition pulvérulente par h:

| | |
|---|---|
| semoule de maïs jaune | 50% |
| farine de pomme de terre | 44,67% |
| saccharose | 2% |
| chili en poudre | 0,25% |
| chlorure de sodium | 1,8% |
| glutamate de sodium | 0,98% |
| acide citrique | 0,3% |

A cette composition pulvérulente, on ajoute 4,2 kg/h d'huile de palme hydrogénée et 4,7 kg/h d'eau. Le mélange ainsi formé dans l'extrudeuse présente une teneur en eau de 18%.

On cuit-extrude ce mélange en portant sa température dans l'extrudeuse à 160°C sous une pression de 12 MPa, les vis tournant à 180 rpm.

On réalise l'extrusion au travers d'une filière présentant un orifice en forme de fente de 0,9 mm de largeur et de 4 cm de longueur.

Le boudin extrudé expansé obtenu présente la forme d'une bande de 4 mm d'épaisseur et 55 mm de largeur. Sa teneur en eau est de 8,5%.

On lamine la bande entre deux rouleaux dont la température de surface est maintenue à 30°C et qui exercent sur elle une pression de 30 kPa. On réduit ainsi son épaisseur à 1,5 mm.

On découpe la bande laminée par estampage en morceaux de forme elliptique de 55 mm de longueur.

On post-sèche ces morceaux en lit fluidisé à 150°C durant quelques min jusqu'à une teneur en humidité résiduelle de 3%.

L'amuse-bouche ainsi obtenu présente une teneur en matière grasse de 9,45% et une texture alvéolée serrée très semblable à celle d'un chips préparé de manière traditionnelle par passage à la grande friture d'une abaisse de pâte de pomme de terre.

### Exemple 2

Pour préparer le mélange à extruder, on déverse les différents ingrédients de la composition pulvérulente suivante dans la trémie d'alimentation d'une extrudeuse CLEXTRAL de type BC 72, à raison de 150 kg de composition pulvérulente par h:

| | |
|---|---|
| semoule de maïs jaune | 94,52% |
| saccharose | 2% |
| chili en poudre | 0,5% |
| chlorure de sodium | 2% |
| glutamate de sodium | 0,98% |

A cette composition pulvérulente, on ajoute 13,8 kg/h d'huile de palme hydrogénée et 14,1 kg/h d'eau. Le mélange ainsi formé dans l'extrudeuse présente une teneur en eau de 17%.

On cuit-extrude ce mélange en portant sa température dans l'extrudeuse à 164°C sous une pression de 11,3 MPa, les vis tournant à 150 rpm.

On réalise l'extrusion au travers d'une filière présentant un orifice en forme de fente de 1,2 mm de largeur et de 4 cm de longueur.

Le boudin extrudé expansé obtenu présente la forme d'une bande de 5,5 mm d'épaisseur et 60 mm de largeur. Sa teneur en eau est de 9%.

On lamine la bande entre deux rouleaux dont la température de surface est maintenue à 30°C et qui exercent sur elle une pression de 30 kPa. On réduit ainsi son épaisseur à 1,8 mm.

On découpe la bande laminée par estampage en morceaux en forme de triangles isocèles de 60 mm de hauteur.

On post-sèche ces morceaux en lit fluidisé à 150°C durant quelques min jusqu'à une teneur en humidité résiduelle de 3,5%.

L'amuse-bouche ainsi obtenu présente une teneur en matière grasse de 9,5% et une texture alvéolée serrée très semblable à celle d'un tortilla préparé de manière traditionnelle par passage à la grande friture d'une abaisse de pâte de maïs.

### Exemple comparatif i

On prépare une purée ou pâte de pomme de terre présentant une teneur en eau de 50%. On l'abaisse à 2 mm d'épaisseur et l'on en découpe des disques de 4 cm de diamètre par estampage.

On plonge ces disques dans la grande friture, en l'occurrence dans une huile d'olive à 200°C, pendant deux minutes.

On obtient des chips présentant une texture alvéolée serrée semblable à celle de l'amuse-bouche selon l'exemple 1 mais dont la teneur en matière grasse est de 32%.

### Exemple comparatif ii

On prépare une pâte de farine de maïs présentant une teneur en eau de 30%. On l'abaisse à 2 mm d'épaisseur et l'on en découpe des disques de 4 cm de diamètre par estampage.

On plonge ces disques dans la grande friture, en l'occurrence dans une huile d'olive à 200°C, pendant deux minutes.

On obtient des tortillas présentant une texture alvéolée serrée semblable à celle de l'amuse-bouche selon l'exemple 2 mais dont la teneur en matière grasse est de 27%.

## Revendications

1. Procédé de fabrication d'un amuse-bouche, dans lequel on prépare un mélange comprenant au moins une farine ou semoule de féculent et, le cas échéant, une quantité d'eau ajoutée telle qu'il présente une teneur en eau de 8-18%, on cuit-extrude le mélange, l'extrusion étant réalisée au travers d'une filière présentant au moins un orifice oblong débouchant dans l'atmosphère ambiante, de manière à obtenir un boudin expansé présentant une forme de bande présentant un coefficient d'expansion de 2 à 6, on lamine la bande de manière à réduire son épaisseur d'un facteur 2 à 6 et on la découpe en morceaux.

2. Procédé selon la revendication 1, dans lequel on prépare un mélange comprenant, en parties en poids, 10-98 parties de farine ou semoule de maïs, 0-88 parties de farine de pommes de terre, 1-3 parties de chlorure de sodium et 0-3 parties de saccharose.

3. Procédé selon la revendication 1, dans lequel on prépare un mélange présentant une teneur en matière grasse de 8-15%, en % sur matière sèche.

4. Procédé selon la revendication 1, dans lequel on cuit-extrude le mélange sous 10-15 MPa à 80-200°C durant 20-60 s.

5. Procédé selon la revendication 1, dans lequel l'orifice oblong est une fente de 0,7-3 mm de largeur et 2-10 cm de longueur.

6. Procédé selon la revendication 1, dans lequel on lamine la bande sous l'effet d'au moins un rouleau exerçant sur elle une pression de 10-50 kPa.

7. Procédé selon la revendication 1, dans lequel on découpe la bande laminée par estampage en morceaux de forme triangulaire, circulaire ou ovale.

8. Procédé selon la revendication 1, dans lequel on post-sèche les morceaux découpés jusqu'à une teneur en eau résiduelle de 3-5%.

## Claims

1. Process for manufacturing a snack food, wherein a mixture is prepared comprising at least one starch or starchy semolina and, if need be, a quantity of added water such that it has a water content of 8-18 %, the mixture is cooked-extruded, extrusion being carried out through a die having at least one oblong orifice emerging into the ambient atmosphere, so as to obtain an expanded rope in the form of a strip having a coefficient of expansion of 2 to 6, the strip is rolled so as to reduce its thickness by a factor of 2 to 6, and is cut into pieces.

2. Process according to claim 1, wherein a mixture is prepared comprising, by weight, 10-98 parts of maize flour or semolina, 0-88 parts of potato flour, 1-3 parts of sodium chloride and 0-3 parts of sucrose.

3. Process according to claim 1, wherein a mixture is prepared having a fat content of 8-15 %, as a percentage of dry matter.

4. Process according to claim 1, wherein the mixture is cooked-extruded under 10-15 MPa at 80-200°C for 20-60 s.

5. Process according to claim 1, wherein the oblong orifice is a slit 0.7-3 mm wide and 2-10 cm long.

6. Process according to claim 1, wherein the strip is rolled under the effect of at least one roller exerting on it a pressure of 10-50 kPa.

7. Process according to claim 1, wherein the rolled band is cut up by stamping into pieces with a triangular, circular or oval shape.

8. Process according to claim 1, wherein the cut out pieces are post-dried until they have a residual water content of 3-5 %.

## Patentansprüche

1. Verfahren zur Herstellung eines Snackprodukts, in dem eine Mischung hergestellt wird, die mindestens ein Mehl oder einen Gries eines stärkehaltigen pflanzlichen Produkts und gegebenenfalls beigegebenes Wasser in einer solchen Menge enthält, daß sie einen Wassergehalt von 8 bis 18 % aufweist, die Mischung kochextrudiert wird, wobei die Extrusion über eine Düse stattfindet, die mindestens eine längliche, in die umgebende Atmosphäre ausmündende Öffnung aufweist, so daß man einen expandierten Strang in Form eines Bandes mit einem Expansionskoeffezienten von 2 bis 6 erhält, das Band so gewalzt wird, daß seine Dicke um einen Faktor 2 bis 6 verringert wird, und es in Stücke geschnitten wird.

2. Verfahren nach Anspruch 1, in dem eine Mischung hergestellt wird, die in Gewichtsteilen 10 bis 98 Teile Maismehl oder -gries, 0 bis 88 Teile Kartoffelmehl, 1 bis 3 Teile Natriumchlorid und 0 bis 3 Teile Saccharose enthält.

3. Verfahren nach Anspruch 1, in dem eine Mischung hergestellt wird, die einen Fettgehalt von 8 bis 15 % in der Trockenmasse aufweist.

4. Verfahren nach Anspruch 1, in dem die Mischung während 20 bis 60 s unter 10 bis 15 MPa bei 80-200°C kochextrudiert wird.

5. Verfahren nach Anspruch 1, in dem die längliche Öffnung ein Schlitz mit einer Breite von 0,7 bis 3 mm und einer Länge von 2 bis 10 cm ist.

6. Verfahren nach Anspruch 1, in dem das Band durch Einwirkung mindestens einer Walze gewalzt wird, die auf das Band einen Druck von 10 bis 50 kPa ausübt.

7. Verfahren nach Anspruch 1, in dem das gewalzte Band durch Stanzen in Stücke dreieckiger, kreisförmiger oder ovaler Form geschnitten wird.

8. Verfahren nach Anspruch 1, in dem die geschnittenen Stücke bis zu einem Restwassergehalt von 3 bis 5 % nachgetrocknet werden.
